# FASCICULE DE BREVET EUROPEEN

(11) **EP 2 076 862 B1**
(45) Date de publication et mention de la délivrance du brevet: **30.08.2017**
(21) Numéro de dépôt: 07820853.5
(22) Date de dépôt: 02.10.2007
(51) Int. Cl.: G06F 21/87

(54) **DISPOSITIF DE PROTECTION POUR CARTE ELECTRONIQUE**
SCHUTZEINRICHTUNG FÜR EINE ELEKTRONISCHE KARTE
PROTECTION DEVICE FOR AN ELECTRONIC CARD

(30) Priorité: 02.10.2006 FR 0608620
(43) Date de publication de la demande: 08.07.2009
(73) Titulaire: Ingenico Group, 75015 Paris (FR)
(72) Inventeur: DUBOIS, Eric, F-92200 Neuilly sur Seine (FR); BARNERON, Sylvain, F-92200 Neuilly sur Seine (FR)
(74) Mandataire: Vidon Brevets & Stratégie
(86) Numéro de dépôt international: PCT/EP2007/060471
(87) Numéro de publication internationale: WO 2008/040737

(56) Documents cités:
- EP-A- 1 462 907
- US-A- 5 675 319
- US-A1- 2004 103 302

## Description

La présente invention concerne le domaine technique général de la protection contre les intrusions de terminaux comprenant des données confidentielles.

Elle est notamment adaptée aux terminaux de paiement qui doivent assurer un certain niveau de sécurité pour empêcher l'accès non autorisée à une carte électronique du terminal, et plus particulièrement aux données confidentielles qui transitent sur une région de cette carte électronique.

### PRESENTATION GENERALE DU CONTEXTE ET DE L'ART ANTERIEUR

Il a déjà été proposé des solutions pour garantir la sécurité des terminaux comprenant une carte électronique sur une région de laquelle des données confidentielles transitent ou sont stockées en mémoire.

Une première solution connue consiste à protéger la carte électronique du terminal avec un capot métallique. Ceci permet d'augmenter la difficulté pour un tiers malveillant d'avoir accès à la carte électronique du terminal comprenant les données confidentielles.

Toutefois, cette solution ne constitue qu'une protection mécanique qui une fois enlevée, n'empêche pas un tiers d'avoir accès à la région de la carte électronique à protéger.

Des dispositifs améliorés de protection de la carte électronique du terminal comprenant des moyens de détection d'une tentative d'intrusion ont donc été mis en place.

Notamment, on connaît des dispositifs permettant de détecter une tentative d'ouverture du capot de protection, cette détection par des moyens de traitement du terminal entraînant l'activation de fonctions anti-fraudes du terminal, comme par exemple la mise hors service du terminal. Le document US-A-5675319 décrit un dispositif anti-intrusion pour carte électronique comprenant un circuit flexible, un guide de support du circuit flexible et un capot de protection.

Le document EP 1 462 907 décrit un tel dispositif permettant de détecter une ouverture du capot de protection de la carte électronique du terminal, et d'activer des fonctions anti-fraudes du terminal.

Le dispositif décrit dans le document EP 1 462 907 comprend un capot en plastique ou en céramique, et une piste électriquement conductrice dans une couche du capot.

La piste électriquement conductrice est reliée aux bornes de moyens de traitement de manière à fermer un circuit électrique de détection.

Toute tentative d'intrusion d'un tiers par perçage, découpage ou arrachage du capot induit un sectionnement de la piste électriquement conductrice.

Le sectionnement de la piste électriquement conductrice entraîne l'ouverture du circuit électrique de détection.

Cette ouverture est détectée par les moyens de traitement qui activent les fonctions anti-fraude du terminal.

Un inconvénient de ce type de dispositif est qu'il coûte cher et est délicat à mettre en oeuvre.

Un but de la présente invention est de proposer un dispositif amélioré de protection contre les intrusions de terminaux comprenant des données confidentielles.

### PRESENTATION DE L'INVENTION

A cet effet on prévoit un dispositif anti-intrusion pour carte électronique comprenant :
- un circuit flexible comportant une piste électriquement conductrice en forme de treillis reliée à des moyens de traitement de la carte électronique,
- un guide de support du circuit flexible permettant de maintenir le circuit flexible en position,
- un capot de protection coiffant l'ensemble constitué du guide et du circuit flexible,
le dispositif anti-intrusion étant destiné à être disposé dans une région de la carte électronique à protéger et le capot comprend des pattes élastiques à retour de forme au dévissage permettant de dégager le dispositif anti-intrusion de la carte électronique en réponse à un dévissage de vis de fixation du dispositif. Des aspects préférés, mais non limitatifs du dispositif anti-intrusion selon l'invention sont les suivants, seuls ou en combinaison :
- le guide comprend un cadre,
- la région à protéger comprend un connecteur de carte à puce, le guide comprenant des moyens de protection de broches du connecteur sur lesquelles des données confidentielles sont accessibles,
- les moyens de protection des broches comprennent une patte rectangulaire s'étendant vers le centre du cadre,
- le circuit flexible comprend au moins une languette,
- le guide comprend des moyens de retenu du circuit flexible,
- le guide comprend des moyens d'arrachage du circuit flexible en réponse à une traction sur celui-ci
- les moyens de retenu et d'arrachage du circuit flexible comprennent un plot rectangulaire comportant, sur sa face en regard du centre du cadre, un ergot qui coopère avec un bord d'une lumière adjacent de la languette du circuit flexible,
- le circuit flexible comprend au moins deux pistes de connexion électriquement conductrices, et la carte électronique comprend au moins un pont électriquement conducteur, le pont étant agencé sur la carte électronique de manière à venir en contact avec les deux pistes de connexion lorsque le dispositif anti-intrusion est disposé dans la région de la carte électronique à protéger,
- la carte électronique comprend en outre une piste secondaire électriquement conductrice reliée à la masse et disposée autour du pont.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre une vue en perspective éclatée du dispositif anti-intrusion selon l'invention,
- les figures 2 et 7 illustrent une vue en perspective du dispositif anti-intrusion une fois celui-ci assemblé,
- la figure 3 est une vue en perspective d'un guide du dispositif anti-intrusion,
- la figure 4 est une vue de dessus d'un circuit flexible du dispositif anti-intrusion,
- la figure 5 est une vue en perspective du circuit flexible,
- la figure 6 est une représentation schématique de portion du circuit flexible et de la carte électronique à protéger,
- la figure 8 est une vue en perspective d'une portion du dispositif anti-intrusion.

### DESCRIPTION DE L'INVENTION

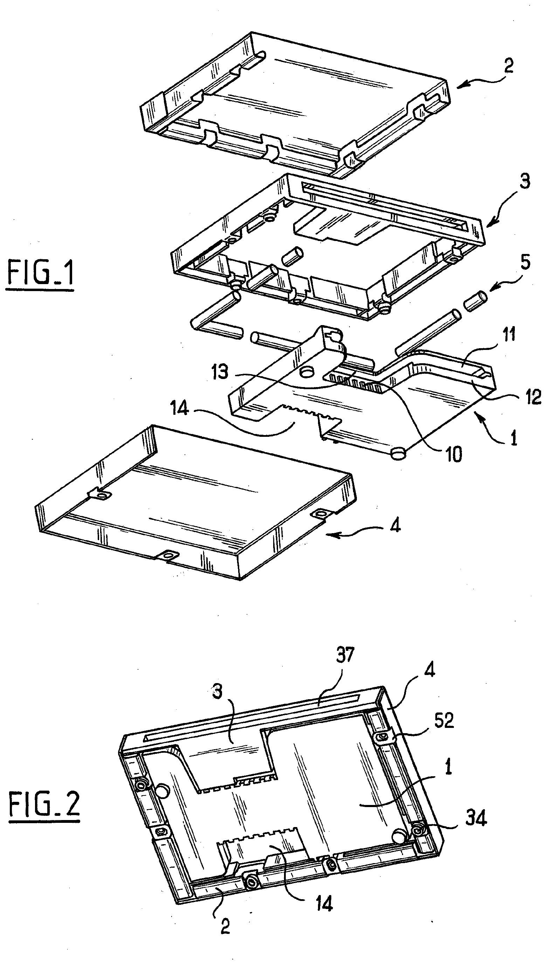

En référence à la figure 1, on a illustré une vue en perspective éclatée du dispositif anti-intrusion selon l'invention.

Ce dispositif anti-intrusion est destiné à être disposé dans une région à protéger d'une carte électronique.

Dans le mode de réalisation illustré à la figure 1, le dispositif anti-intrusion permet la protection d'un connecteur 1 de carte à puce disposé sur une carte électronique (non représentée) et dans lequel un utilisateur insère sa carte à puce par exemple pour effectuer une opération de paiement.

Lors de l'insertion de la carte à puce dans le connecteur, des données confidentielles de la carte à puce sont lues par des moyens de lecture du connecteur 1. Ces données confidentielles sont ensuite envoyées sur des broches d'entrée/sortie 10 du connecteur 1 reliées à des moyens de chiffrement (non représentés).

Les moyens de chiffrement permettent de chiffrer les données confidentielles lues par les moyens de lecture du connecteur 1. Ces données, une fois chiffrées sont transférées à d'autres moyens de la carte électronique.

Ainsi, au niveau du connecteur 1, et plus particulièrement au niveau des broches d'entrée/sortie 10 du connecteur 1, les données confidentielles ne sont pas chiffrées et sont donc accessibles par un tiers malveillant qui placerait des espions au niveau de ces broches d'entrée/sortie 10.

Le dispositif anti-intrusion décrit ci-après permet de protéger l'accès au connecteur 1 et notamment aux broches d'entrée/sortie 10.

Comme illustré à la figure 1, le dispositif anti-intrusion comprend un circuit flexible 2, un guide 3, un capot 4 et un joint élastique 5.

Le guide 3 est destiné à recevoir le connecteur 1 de carte à puce à protéger.

Le circuit flexible 2 est destiné à recouvrir le guide 3.

Le capot 4 est destiné à venir coiffer le circuit flexible 2.

Le joint élastique 5 est destiné à être disposé entre le guide 3 et le circuit flexible 2.

Le dispositif anti-intrusion ainsi assemblé, tel qu'illustré à la figure 2, est ensuite fixé sur la carte électronique grâce à des moyens de fixation.

Les moyens de fixation comprennent des vis de fixation ou de tout autre moyen connu permettant la mise en contact du dispositif anti-intrusion sur la carte électronique (boîtier extérieur du produit final par exemple, etc.).

### Le connecteur 1 :

Le connecteur 1 est de forme parallélépipédique rectangle.

Le connecteur 1 comprend une fente longitudinale 11 sur l'un 12 de ses bords longitudinaux.

Le connecteur 1 comprend deux évidements 13, 14 sur ses bords longitudinaux.

L'évidement 13 du connecteur disposé du côté de la fente longitudinal 11 comprend les broches 10 à protéger sur lesquelles les données confidentielles de la carte à puce sont accessibles de manière déchiffrée.

### Le guide 3 :

Le guide 3 sert de support au circuit flexible 2 : le circuit flexible 2 est disposé autour du guide 3. Le guide 3 permet de maintenir le circuit flexible 2 en position.

Le guide 3 comprend des moyens de retenue et d'arrachage du circuit flexible 2.

Le guide 3 comprend également des moyens permettant d'assurer une pression de contact du dispositif anti-intrusion sur la carte électronique, et le maintien de celui-ci en position.

Le guide 3 comprend de plus des moyens de centrage du dispositif anti-intrusion sur la carte électronique.

Le guide 3 comprend en outre des moyens de guidage du joint élastique 5.

Le guide 3 comprend également des moyens de protection des broches 10 du connecteur 1 à protéger.

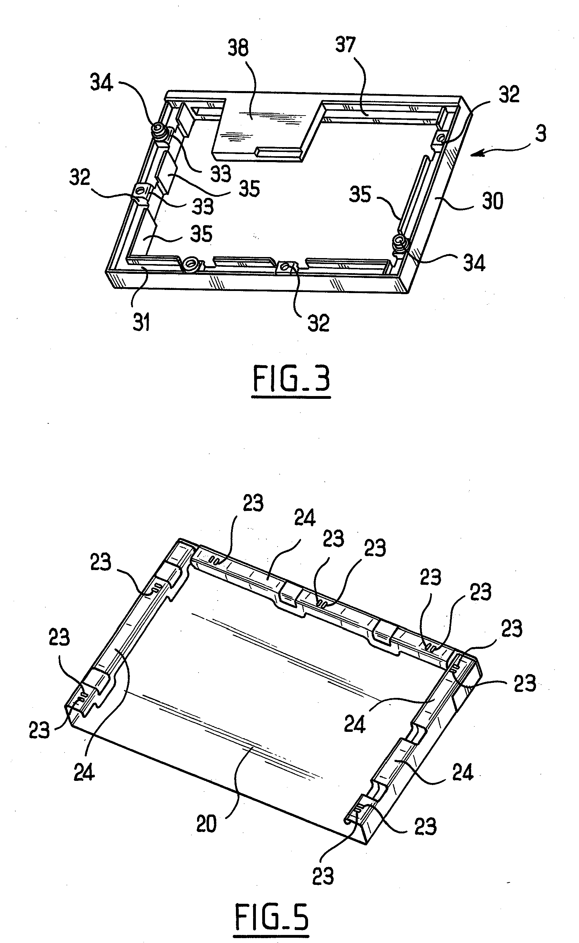

Comme illustré à la figure 3, le guide plastique 3 comprend un cadre 30 s'étendant dans un plan.

Pour des raisons de clarté, on définira dans la suite ce plan comme un plan horizontal. Egalement pour des raisons de clarté, on définira dans la suite les faces des bords du cadre 30 destinées à venir en regard de la carte électronique comme les faces inférieures des bords du cadre 30.

Le guide 3 est par exemple en plastique pour faciliter sa fabrication par moulage.

Le guide 3 comprend une fente longitudinale 37 sur un des bords longitudinaux du cadre 30.

Le bord du cadre 30 comportant la fente longitudinale 37 comprend également une patte rectangulaire 38 s'étendant vers le centre du cadre 30, parallèlement à la face inférieure du bord du cadre 30 et dans le prolongement de celle-ci. La patte rectangulaire 38 est destinée à venir coiffer l'évidement 13 du connecteur 1 comprenant les broches 10 à protéger. Les moyens de protection des broches du connecteur 1 comprennent la patte rectangulaire 38.

Le cadre 30 comprend une gorge 31 sur les faces inférieures des trois bords du cadre 30 autres que le bord comprenant la fente longitudinale 37. La gorge 31 est destinée à recevoir le joint élastique 5. Les moyens de guidage du joint élastique comprennent la gorge 31.

Le guide 3 comprend également des plots 32 sur les faces inférieures comprenant la gorge 31. Les plots 32 font sailli vers le centre du cadre 30. Chaque plot 32 est de forme rectangulaire, et comprend, sur sa face en regard du centre du cadre 30, un ergot 33. Ces ergots permettent de déchirer une piste électriquement conductrice 21 du circuit flexible 2 en cas de traction sur celui-ci. Chaque ergot est destiné à venir en contact un bord 27 d'une lumière adjacent à une languette 25 comme il sera expliqué dans la suite. Les moyens de retenue et d'arrachage du circuit flexible 2 comprennent les ergots 33.

Le guide 3 comprend au moins un tenon 34 disposé sur au moins un plot 32. Dans le mode de réalisation illustré à la figure 3, le guide 3 comprend deux tenons 34. Chaque tenon 34 est destiné à venir s'ajuster dans une mortaise correspondante (non représentée) prévue sur la carte électronique. Les tenons 34 et mortaises permettent de faciliter la mise en place et le centrage du dispositif anti-intrusion sur la carte électronique. Les moyens de centrage du dispositif anti-intrusion sur la carte électronique comprennent les tenons 34.

Les plots 32 et les tenons 34 comprennent chacun un trou taraudé destiné à recevoir le pas de vis d'une vis de fixation pour permettre la fixation du guide 3 sur la carte électronique. Les moyens permettant d'assurer une pression de contact et le maintien en position du dispositif anti-intrusion sur la carte électronique comprennent les trous taraudés et les vis de fixation.

Le guide 3 comprend sur la paroi intérieure du cadre 30 des ailes 35 qui s'étendent perpendiculairement au plan horizontal et parallèlement à la paroi intérieure du cadre 30. Les ailes 35 sont disposées sur les trois bords du cadre 30 autres que celui comprenant la fente longitudinale 37. Chaque aile 35 est située entre deux plots 32. Les ailes 35 ne font pas sailli du cadre 30 : elles s'arrêtent au niveau des faces inférieures des bords du cadre 30.

Le guide 3 comprend de plus une fente 36 entre chaque aile 35 et la paroi intérieure du cadre 30. La fente 36 est destinée à recevoir le bord du circuit flexible 2 et permet de faciliter la mise en place et le maintien en position du circuit flexible 2. Les moyens de retenue du circuit flexible comprennent également les ailes 35.

Les longueurs des bords longitudinaux et transversaux du cadre 30 sont prévues suffisantes pour permettre la réception du connecteur 1 à l'intérieur du cadre 30.

### Le circuit flexible 2 :

Le circuit flexible 2 comprend une feuille souple 20 dans laquelle est disposée la piste électriquement conductrice 21. La piste électriquement conductrice 21 est par exemple en cuivre.

La feuille 20 comprend des languettes 25 disposées de manière à venir en contact avec la paroi intérieure du cadre 30, entre deux ailes 35, lorsque le dispositif anti-intrusion est assemblé.

Chaque languette 25 comprend une lumière 26 disposée de sorte à se trouver au droit d'un plot 32 du guide 3 lorsque le dispositif anti-intrusion est assemblé.

Le bord adjacent à la languette 25 est destiné à venir en contact avec l'ergot 33 du plot 32 situé au droit de la lumière 26.

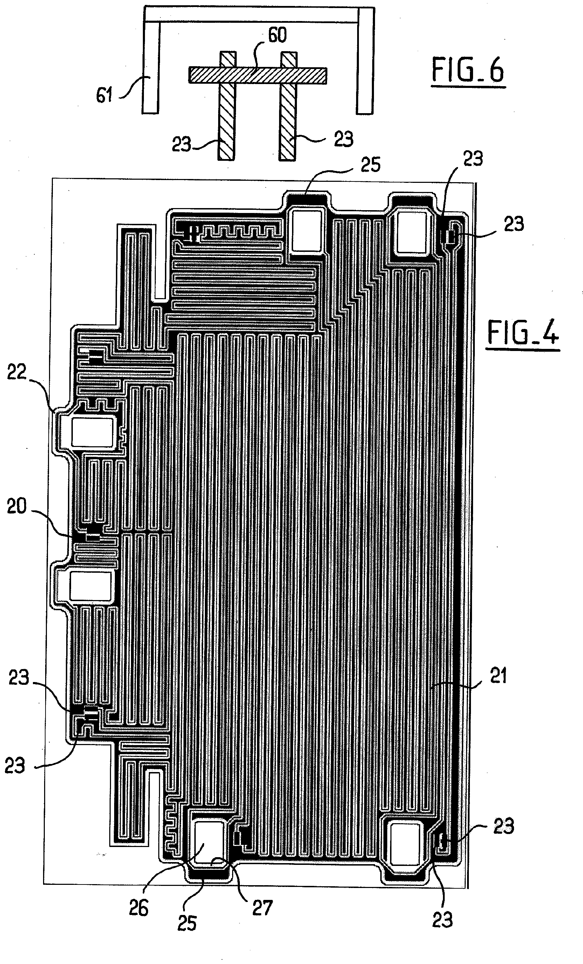

Dans le mode de réalisation illustré à la figure 4, la piste électriquement conductrice 21 est en forme de treillis. On entend, dans le cadre de la présente invention par « treillis », un motif en créneau tel qu'illustré à la figure 4, ou en spirale.

La piste électriquement conductrice 21 est reliée aux bornes de moyens de traitement (non représentés) de la carte électronique tel qu'un microprocesseur. La piste électriquement conductrice 21 forme une ligne de sécurité reliée aux moyens de traitement 34.

Les moyens de traitement 34 sont adaptés à déterminer si ses bornes sont connectées électriquement, par exemple en mesurant la résistance de la piste électriquement conductrice 21.

Lorsqu'un individu tente d'accéder au connecteur 1 en retirant le dispositif anti-intrusion, la piste électriquement conductrice 21 n'est plus en contact avec les bornes des moyens de traitement de la carte électronique.

Les moyens de traitement détectent une modification de la résistance de la piste électriquement conductrice 21, indiquant qu'une tentative d'ouverture du dispositif a lieu, et mettent en oeuvre des fonctions anti-fraudes, comme par exemple la mise hors service de la carte électronique.

La piste électriquement conductrice 21 parcourt chaque languette 25. Ceci permet d'assurer un sectionnement de la piste électriquement conductrice 21 suite au déchirement du circuit flexible 2 par les ergots 33 en cas de traction sur le circuit flexible 2.

La piste électriquement conductrice 21 est composée de morceaux de piste distincts qui sont reliés par l'intermédiaire de ponts 60 disposés sur la carte électronique.

Chaque morceau de la piste électriquement conductrice est relié à deux pistes de connexion 23 disposées sur une face de la feuille 20. Ces pistes de connexions 23 sont situées dans une zone 24 destinée à venir en regard de la carte électronique.

En effet, le circuit flexible 2 est destiné à être disposé autour du guide 3. Ainsi, une zone 24 d'une des faces de la feuille 20 souple est en contact avec la carte électronique une fois le dispositif anti-intrusion assemblé. Cette zone 24 est illustrée à la figure 5.

Le lecteur aura compris que les pistes de connexion 23 et la piste électriquement conductrice 21 s'étendent dans des plans différents.

Comme illustré à la figure 6, deux morceaux de piste adjacents sont reliés par l'intermédiaire d'un pont respectif 60 situé sur la carte électronique et destiné à venir en contact avec les pistes de connexion 23 des deux morceaux de piste adjacents lorsque le dispositif anti-intrusion est assemblé.

Le fait que la piste électriquement conductrice 21 soit constituée de morceaux de piste distincts fermés par des ponts 60 électriquement conducteurs lorsque le dispositif anti-intrusion est assemblé permet de détecter toute tentative d'intrusion par retrait du dispositif anti-intrusion ou par soulèvement d'un côté du dispositif anti-intrusion.

Chaque pont 60 est protégé par une piste secondaire 61 située sur la carte électronique et reliée à la masse.

La piste secondaire 61 est disposée autour du pont 60. Ceci permet de détecter un court circuit en cas de tentative d'intrusion par insertion d'un objet métallique entre le dispositif anti-intrusion et la carte électronique afin de maintenir un contact entre les pistes de connexion de deux morceau de piste adjacents.

Du fait de son enroulement autour du guide 3, le circuit flexible 2 forme une paroi de protection du connecteur 1.

L'utilisation d'un circuit flexible 2 permet un grand choix de technologie de fabrication pour s'adapter au degré de sécurité voulu ainsi qu'au coût acceptable pour la fonction de protection du dispositif anti-intrusion.

Par exemple, dans un mode de réalisation, le circuit flexible 2 est réalisé en encre argent avec un piste électriquement conductrice 21 de section égale à 0.5 millimètres, et une distance entre deux portions adjacentes de la piste électriquement conductrice 21 de 0.5 millimètres.

Dans un autre mode de réalisation, le circuit flexible 2 est réalisé en polyester cuivre avec une piste électriquement conductrice 21 de section égale à 0.2 millimètres et une distance entre deux portions adjacentes de la piste électriquement conductrice 21 égale à 0.2 millimètres.

Dans un autre mode de réalisation, le circuit flexible est réalisé en Capton, ce qui permet la fabrication d'une piste électriquement conductrice 21 de section de l'ordre du dixième de millimètres et une distance entre deux portions adjacentes de la piste électriquement conductrice 21 de l'ordre du dixième de millimètres.

### Le capot 4 :

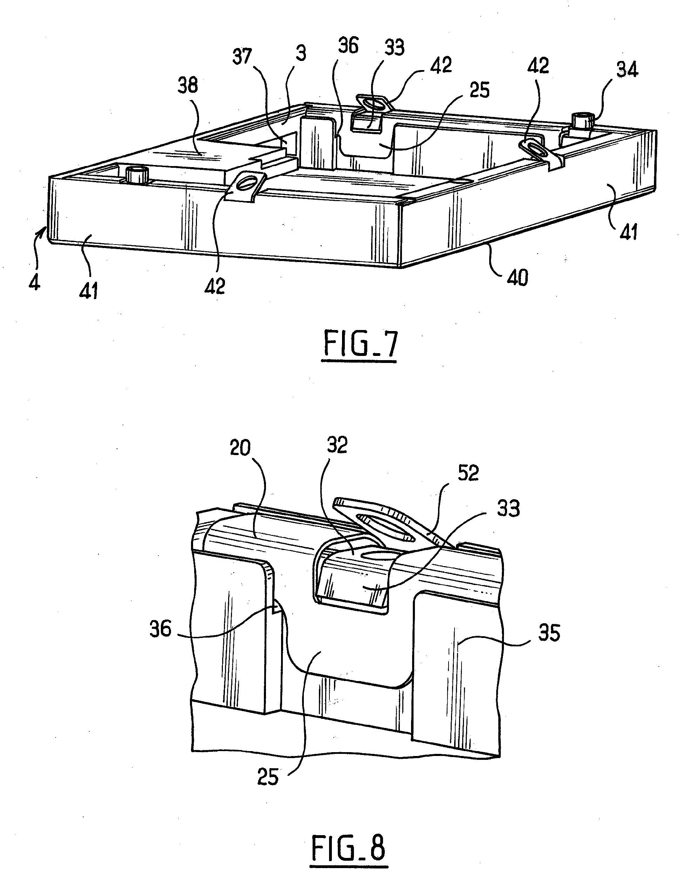

Le capot est notamment illustré aux figures 7 et 8. Le capot 4 est destiné à coiffer l'ensemble constitué du guide 3, du circuit flexible 2 et du connecteur 1.

De préférence, le circuit flexible 2 est plaqué contre le capot 4. De cette façon, il est difficile de détériorer le capot 4 sans détériorer le circuit flexible 2, et plus particulièrement la piste électriquement conductrice 21.

Le capot 4 est de forme parallélépipédique rectangle. Il comprend une première plaque 40 s'étendant parallèlement au plan horizontale et quatre plaques 41 disposées perpendiculairement à la première plaque 40 de manière à former un parallélépipède rectangle.

Le capot 4 est de préférence constitué d'une matière dure, comme du métal afin d'augmenter la difficulté d'intrusion, notamment par perçage.

Le fait que le capot 4 soit constitué d'une matière dure permet d'assurer que, lors d'une tentative d'intrusion par perçage, le foret endommage le circuit flexible 2 accolé au capot 4.

En effet, il est difficile lors d'un perçage d'une surface dure, de s'arrêter tout de suite après celle-ci.

Le capot comprend des moyens permettant de dégager le dispositif anti-intrusion de la carte électronique en réponse à un dévissage des vis de fixation. Ceci permet de détecter une tentative de dévissage du dispositif anti-intrusion.

En effet, une fois assemblé, le dispositif anti-intrusion est fixé sur la carte électronique au moyen de vis de fixation. Lors de cette fixation, les pistes de connexion des morceaux de piste de la piste viennent en contact avec les ponts respectifs disposés sur la carte électronique. Dans le même temps, la piste de connexion est reliée aux bornes des moyens de traitement de manière à permettre la détection d'une ouverture du circuit fermé formé par les moyens de traitement et la piste électronique.

Le terminal est ensuite activé par des opérateurs habilités.

Lors d'un dévissage d'une visse de fixation, les moyens permettant de dégager le dispositif anti-intrusion tendent à déplacer le dispositif anti-intrusion relativement à la carte électronique.

Les moyens permettant de dégager le dispositif anti-intrusion comprennent au moins une patte élastique 42 à retour de forme au dévissage. Dans le mode de réalisation illustré aux figures 7 et 8, les moyens permettant de dégager le dispositif anti-intrusion comprennent trois pattes disposées sur les deux bords latéraux et un bord longitudinal du capot. Par ailleurs, dans ce mode de réalisation, les pattes sont de forme rectangulaire.

Les pattes élastiques 42 sont destinées à venir en regard des plots 32 du guide 3 lorsque le dispositif anti-intrusion est assemblé.

Chaque patte élastique 42 comprend une ouverture traversante 43 destinée à venir en vis-à-vis du trou taraudé du plot 32 correspondant.

### Le joint élastique 5 :

Le joint élastique 5 permet d'assurer le contact des pistes de connexion 23 du circuit flexible 2 sur la carte électronique : lorsque l'on sert les vis de fixation, le guide 3 vient comprimer le joint élastique 5 qui lui-même applique une pression sur le circuit flexible 2, assurant ainsi un bon contact entre les pistes de connexion et les ponts 60 de la carte électronique.

Les propriété élastique du joint élastique sont également utilisé comme moyen ressort permettant de dégager le dispositif anti-intrusion de la carte électronique au dévissage

Le joint élastique 5 permet d'éviter l'utilisation d'inter connecteurs verticaux, par exemple de type zébra.

Le joint élastique 5 est constitué d'une pluralité de morceaux de joint destiné à être disposés dans la gorge 31 du guide 3.

Dans un mode de réalisation, le joint élastique 5 est remplacé par des lames plastiques flexibles fabriquées dans la même pièce que le guide 3.

### Le dispositif anti-intrusion :

Le dispositif anti-intrusion permet de protéger un connecteur carte à puce disposé sur une carte électronique contre les tiers malveillants.

Le dispositif anti-intrusion présente l'avantage de :
- permettre la détection de toute tentative d'intrusion pour crocheter/ souder les broches du connecteur à l'aide d'un fil,
- permettre la détection de toute tentative d'intrusion pour supprimer l'efficacité de la piste électriquement conductrice en forme de treillis par création d'un court circuit entre l'entrée et la sortie de la piste électriquement conductrice,
- permettre la protection des vis de fixation,
- présenter un bon rapport entre le niveau de protection obtenu et le coût de fabrication du dispositif anti-intrusion,
- permettre d'éviter l'utilisation d'inter connecteurs verticaux,
- de permettre une maintenance aisée pour les personnes habilité à effectuer des opérations sur la carte électronique.

Le lecteur appréciera que de nombreuses modifications au dispositif anti-intrusion peuvent être apportées sans sortir matériellement de l'enseignement de ce document. Par exemple, la piste électriquement conductrice peut comprendre deux ou plus de deux morceaux de piste. Le nombre de pont sur la carte électronique variera en fonction du nombre de morceaux de piste composant la piste électriquement conductrice 21.

### REFERENCES

1 connecteur,
10 broche du connecteur,
11 fente longitudinale du connecteur,
12 bord longitudinal du connecteur,
13, 14 évidemment,
2 circuit flexible,
20 feuille,
21 piste électriquement conductrice,
22 piste secondaire,
23 piste de connexion,
24 zone,
25 languette,
26 lumière,
27 bord de la lumière adjacent à la languette,
3 guide,
30 cadre,
31 gorge,
32 plot,
33 ergot,
34 tenon,
35 aile,
36 fente,
37 fente longitudinale,
38 patte rectangulaire,
4 capot,
40, 41 plaque,
42 patte élastique
43 ouverture,
5 joint élastique,
60 pont,
61 piste secondaire.

## Revendications

1. **Dispositif** anti-intrusion pour carte électronique comprenant :
- un circuit flexible (2) comportant une piste électriquement conductrice 21) en forme de treillis reliée à des moyens de traitement de la carte électronique,
- un guide (3) de support du circuit flexible (2) permettant de maintenir le circuit flexible (2) en position,
- un capot (4) de protection coiffant l'ensemble constitué du guide (3) et du circuit flexible (2),
le dispositif anti-intrusion étant destiné à être disposée dans une région de la carte électronique à protéger,
**caractérisé en ce que** le capot (4) comprend des pattes élastiques (42) à retour de forme au dévissage permettant de dégager le dispositif anti-intrusion de la carte électronique en réponse à un dévissage de vis de fixation du dispositif.

2. Dispositif selon la revendication précédente, **caractérisé en ce que** le guide (3) comprend un cadre (30).

3. Dispositif selon l'une des revendications précédentes, **caractérisé en ce que** la région à protéger comprend un connecteur (1) de carte à puce, le guide (3) comprenant des moyens de protection (38) de broches (10) du connecteur (1) sur lesquelles des données confidentielles sort accessibles.

4. Dispositif selon les deux revendications précédentes, **caractérisé en ce que** les moyens de protection (38) des broches (10) comprennent une patte rectangulaire s'étendant vers le centre du cadre (30).

5. Dispositif selon l'une des revendications précédentes, **caractérisé en ce que** le circuit flexible (2) comprend au moins une languette (25).

6. Dispositif selon l'une des revendications précédentes, **caractérisé en ce que** le guide (3) comprend des moyens de retenue (33, 35) du circuit flexible (2).

7. Dispositif selon l'une des revendications précédentes, **caractérisé en ce que** le guide (3) comprend des moyens d'arrachage (32, 33) du circuit flexible (2) en réponse à une traction sur celui-ci.

8. Dispositif selon l'une des deux revendications précédentes, **caractérisé en ce que** les moyens de retenu et d'arrachage du circuit flexible comprennent un plot (32) rectangulaire comportant, sur sa face en regard du centre du cadre (30), un ergot (33) qui coopère avec un bord d'une lumière (26) adjacent de la languette (25) du circuit flexible (2).

9. Dispositif selon l'une des revendications précédentes, **caractérisé en ce que** le circuit flexible (2) comprend au moins deux pistes de connexion électriquement conductrices (23), et la carte électronique comprend au moins un pont électriquement conducteur (60), le pont (60) étant agencé sur la carte 30 électronique de manière à venir en contact avec les deux pistes de connexion (23) lorsque le dispositif anti -intrusion est disposé dans la région de la carte électronique à protéger.

10. Dispositif selon la revendication précédente, **caractérisé en ce que** la carte électronique comprend en outre une piste secondaire électriquement conductrice (22) reliée à la masse et disposée autour du pont (60).

## Patentansprüche

1. Einbruchssicherungsvorrichtung für eine elektronische Karte, umfassend:
- eine flexible Schaltung (2), umfassend eine elektrisch leitende Spur (21) in Form eines Gitters, die mit Mitteln zur Bearbeitung der elektronischen Karte verbunden ist,
- eine Führung (3) zur Unterstützung der flexiblen Schaltung (2), die es ermöglicht, die flexible Schaltung (2) in Position zu halten,
- eine Schutzkappe (4), die die von der Führung (3) und der flexiblen Schaltung (2) gebildete Einheit bedeckt,
wobei die Einbruchssicherungsvorrichtung dazu bestimmt ist, in einem Bereich der zu schützenden elektronischen Karte angeordnet zu werden,
**dadurch gekennzeichnet, dass** die Kappe (4) elastische Laschen (42) mit Formrückkehr bei Lockerung umfasst, die es ermöglichen, die Einbruchssicherungsvorrichtung der elektronischen Karte als Antwort auf eine Lockerung von Befestigungsschrauben der Vorrichtung freizugeben.

2. Vorrichtung nach dem vorhergehenden Anspruch, **dadurch gekennzeichnet, dass** die Führung (3) einen Rahmen (30) umfasst.

3. Vorrichtung nach einem der vorhergehenden Ansprüche, **dadurch gekennzeichnet, dass** der zu schützende Bereich einen Chipkartenanschluss (1) umfasst, wobei die Führung (3) die Schutzmittel (38) von Stiften (10) des Anschlusses (1) umfasst, an denen vertrauliche Daten zugänglich sind.

4. Vorrichtung nach den beiden vorhergehenden Ansprüchen, **dadurch gekennzeichnet, dass** die Schutzmittel (38) der Stifte (10) eine rechteckige Klaue umfassen, die sich zur Mitte des Rahmens (30) erstreckt.

5. Vorrichtung nach einem der vorhergehenden Ansprüche, **dadurch gekennzeichnet, dass** die flexible Schaltung (2) mindestens eine Lasche (25) umfasst.

6. Vorrichtung nach einem der vorhergehenden Ansprüche, **dadurch gekennzeichnet, dass** die Führung (3) Mittel (33, 35) zum Halten der flexiblen Schaltung (2) umfasst.

7. Vorrichtung nach einem der vorhergehenden Ansprüche, **dadurch gekennzeichnet, dass** die Führung (3) Mittel zum Herausziehen (32, 33) der flexiblen Schaltung (2) als Reaktion auf einen Zug auf diese umfasst.

8. Vorrichtung nach einem der beiden vorhergehenden Ansprüche, **dadurch gekennzeichnet, dass** die Mittel zum Halten und Herausziehen der flexiblen Schaltung einen rechteckigen Block (32) umfasst, der auf seiner Seite gegenüber der Mitte des Rahmens (30) einen Haken (33) umfasst, der mit einem Rand einer an die Lasche (25) der flexiblen Schaltung (2) angrenzenden Öffnung (26) zusammenwirkt.

9. Vorrichtung nach einem der vorhergehenden Ansprüche, **dadurch gekennzeichnet, dass** die flexible Schaltung (2) mindestens zwei elektrisch leitende Anschlussspuren (23) umfasst, und die elektronische Karte mindestens eine elektrisch leitende Brücke (60) umfasst, wobei die Brücke (60) auf der elektronischen Karte derart angeordnet ist, dass sie mit den zwei Anschlussspuren (23) in Kontakt kommt, wenn die Einbruchssicherungsvorrichtung in dem Bereich der zu schützenden elektronischen Karte angeordnet ist.

10. Vorrichtung nach dem vorhergehenden Anspruch, **dadurch gekennzeichnet, dass** die elektronische Karte ferner eine zweite elektrisch leitende Spur (22) umfasst, die mit der Masse verbunden und um die Brücke (60) angeordnet ist.

## Claims

1. Anti-intrusion device for electronic card, comprising:
- a flexible circuit (2) comprising an electrically conductive track (21) in the shape of a mesh connected to processing means of the electronic card,
- a guide (3) supporting the flexible circuit (2) allowing the flexible circuit (2) to be maintained in position,
- a protective cover (4) capping the assembly consisting of the guide (3) and the flexible circuit (2),
the anti-intrusion device being configured to be arranged in a region of the electronic card to be protected,
wherein the cover (4) comprises elastic shape memory tabs (42) returning to shape on unscrewing, enabling disengagement of the anti-intrusion device from the electronic card in response to unscrewing of fastening screws of the device.

2. Device according to preceding claim, wherein the guide (3) comprises a frame (30).

3. Device according to one of the preceding claims, wherein the region to be protected comprises a chip card connector (1), the guide (3) comprising protection means (38) to protect the pins (10) of the connector (1) on which confidential data is accessible.

4. Device according to the two preceding claims, wherein the protection means (38) of the pins (10) comprise a rectangular tab extending towards the center of the frame (30).

5. Device according to one of the preceding claims, wherein the flexible circuit (2) comprises at least one tongue (25).

6. Device according to one of the preceding claims, wherein the guide (3) comprises retaining means (33, 35) to retain the flexible circuit (2).

7. Device according to one of the preceding claims, wherein the guide (3)comprises ripping means (32, 33) to rip the flexible circuit (2) in response to traction thereupon.

8. Device according to one of the two preceding claims, wherein the retaining means and the ripping means of the flexible circuit comprise a rectangular pad (32) which, on its side facing the center of the frame (30), comprises a lug (33) cooperating with one edge of a lumen (26) adjacent the tongue (25) of the flexible circuit (2).

9. Device according to one of the preceding claims, wherein the flexible circuit (2) comprises at least two electrically conductive connection tracks (23), and the electronic card comprises at least one electrically conductive bridge (60), the bridge (60) being arranged on the electronic card (30) so as to come into contact with the two connection lines (23) when the anti-intrusion device is arranged in the region of the electronic card to be protected.

10. Device according to preceding claim, wherein the electronic card further comprises a secondary electrically conductive track (22) that is earthed and arranged around the bridge (60).
